# FASCICULE DE BREVET EUROPEEN

(11) **EP 1 928 737 B1**
(45) Date de publication et mention de la délivrance du brevet: **07.01.2009**
(21) Numéro de dépôt: 06808117.3
(22) Date de dépôt: 13.09.2006
(51) Int. Cl.: B64D 13/08, F02C 6/08, F01D 9/06

(54) **TURBOMOTEUR A DOUBLE FLUX POURVU D`UN PREREFROIDISSEUR**
MIT VORKÜHLER VERSEHENES TURBOGEBLÄSE
TURBOFAN PROVIDED WITH A PRE-COOLER

(30) Priorité: 26.09.2005 FR 0509791
(43) Date de publication de la demande: 11.06.2008
(73) Titulaire: AIRBUS France, 31060 Toulouse Cédex (FR)
(72) Inventeur: PORTE, Alain, F-31770 Colomiers (FR)
(74) Mandataire: Bonnetat, Christian
(86) Numéro de dépôt international: PCT/FR2006/002091
(87) Numéro de publication internationale: WO 2007/034050

(56) Documents cités:
- EP-A- 0 469 825
- US-A- 3 486 435
- US-A- 4 474 001
- US-A- 5 269 135
- US-A- 5 729 969

## Description

La présente invention concerne un turbomoteur à double flux pourvu d'un prérefroidisseur.

On sait que, à bord d'un aéronef, il est nécessaire d'avoir à disposition de l'air chaud afin de pouvoir réaliser certaines fonctions, telles que le conditionnement d'air de la cabine de pilotage et de la cabine des passagers ou le dégivrage de certains organes de l'aéronef.

On sait de plus que cet air chaud provient des turboréacteurs de l'aéronef et doit subir un refroidissement important avant utilisation. Pour ce faire, on prévoit un échangeur de chaleur, généralement appelé prérefroidisseur (precooler en anglais aéronautique), dans lequel de l'air chaud prélevé sur le générateur central du turboréacteur est refroidi par de l'air froid du canal de soufflante.

Bien entendu, au cours de ce processus d'échange de chaleur, non seulement l'air chaud prélevé sur le générateur central est refroidi par l'air froid du canal de soufflante, mais encore cet air froid est réchauffé par ledit air chaud. Il est donc nécessaire d'évacuer à l'extérieur cet air froid réchauffé.

Généralement, cet air froid réchauffé est rejeté à l'extérieur au niveau de la partie supérieure du mât de suspension du moteur, devant le bord d'attaque de la voilure, ce qui entraîne la formation de turbulences et de perturbations aérodynamiques augmentant la traînée de l'aéronef.

Pour éviter cet inconvénient, le document américain US-A-5 729 969 propose de rejeter ledit air froid réchauffé à l'intérieur de la chambre à section annulaire formée entre le générateur central de flux chaud et le carénage interne du canal de soufflante, chambre qui est alors munie d'au moins un orifice d'éjection en direction dudit flux froid. Cependant, une telle disposition risque de perturber la régulation thermique du générateur de flux chaud et donc d'accélérer l'usure du turbomoteur.

La présente invention a pour objet de remédier aux inconvénients de la technique antérieure.

A cette fin, selon l'invention, le turbomoteur à double flux pour aéronef, comportant :
- une nacelle creuse à axe longitudinal pourvue, à l'avant, d'une entrée d'air et, à l'arrière, d'une tuyère ;
- un générateur de flux chaud central, disposé axialement dans ladite nacelle ;
- une soufflante disposée dans ladite nacelle, en avant dudit générateur central, et apte à engendrer le flux froid pour ledit turbomoteur ;
- un carénage externe porté intérieurement par ladite nacelle et un carénage interne entourant ledit générateur central, lesdits carénages externe et interne formant entre eux un canal de soufflante pour ledit flux froid à section annulaire, ledit carénage interne délimitant avec ledit générateur central une chambre à section annulaire entourant ledit générateur central ; et
- un prérefroidisseur recevant un courant d'air chaud prélevé sur ledit générateur central et un courant d'air froid prélevé sur ledit flux froid afin d'engendrer un courant d'air chaud refroidi destiné à réaliser des fonctions à bord de l'aéronef, telles que conditionnement d'air ou dégivrage, ledit prérefroidisseur engendrant concomitamment un courant d'air froid réchauffé,
est remarquable en ce que, pour l'évacuation dudit courant d'air froid réchauffé, il comporte au moins une conduite d'évacuation disposée dans ladite chambre et reliant ledit prérefroidisseur à au moins un orifice d'évacuation pratiqué dans ledit carénage interne, en sortie de ladite tuyère de la nacelle, et regardant vers le haut au moins approximativement en direction de ladite aile.

Ainsi, grâce à la présente invention, ledit air froid réchauffé est rejeté dans ledit flux froid à la sortie dudit turbomoteur -donc sans formation de turbulences et de perturbations aérodynamiques ni perturbation dudit flux froid à l'intérieur du canal de soufflante- en étant isolé de l'atmosphère régnant dans ladite chambre par ladite conduite d'évacuation -donc sans perturbation de la régulation thermique dudit générateur central de flux chaud.

Par ailleurs, on remarquera que ledit orifice d'évacuation se trouve ainsi dans la région supérieure du turbomoteur, intentionnellement vide de tout équipement pour éviter la propagation d'un éventuel feu dans le turbomoteur à l'aide de l'aéronef, à travers ledit mât de suspension. Il est donc avantageux de loger au moins en partie ladite conduite d'évacuation dans la partie supérieure de ladite chambre. On remarquera de plus que la disposition de ladite conduite d'évacuation d'air froid réchauffé dans la région supérieure dudit turbomoteur n'est pas un facteur aggravant en cas de feu du turbomoteur. De toute façon, cette conduite d'évacuation peut être avantageusement réalisée en une matière réfractaire résistant aux températures élevées, par exemple une matière céramique.

De façon usuelle, ledit prérefroidisseur peut être disposé également à la partie supérieure dudit turbomoteur. Toutefois, grâce à ladite conduite d'évacuation, il peut être logé à de nombreux emplacements différents de celui-ci.

Par exemple, de façon connue, ledit prérefroidisseur peut être disposé dans le canal de soufflante. Il peut alors être baigné par le flux froid de la soufflante et subir l'action directe de celui-ci. En variante, on peut prévoir une écope amenant audit prérefroidisseur une partie dudit flux froid. Cette variante est particulièrement intéressante car elle permet de disposer une vanne de régulation entre ladite écope et ledit prérefroidisseur, de sorte que la température du courant d'air chaud refroidi peut être régulée -au moins en partie- par réglage de l'admission d'air froid dans le prérefroidisseur.

Dans un autre mode de réalisation, ledit prérefroidisseur peut être disposé dans ladite chambre entourant le générateur central. Dans ce cas, pour l'amenée du courant d'air froid audit prérefroidisseur, on prévoit au moins une conduite de prélèvement disposée au moins en partie dans ladite chambre et reliant ledit prérefroidisseur à au moins un orifice de prélèvement, pratiqué dans ledit carénage interne. Il est alors avantageux que ledit orifice de prélèvement soit muni d'une écope de prélèvement d'air froid sur ledit flux froid.

Un tel mode de réalisation présente l'avantage qu'une vanne de régulation peut être montée sur ladite conduite de prélèvement, pour permettre -au moins en partie- la régulation de la température du courant d'air chaud refroidi par l'admission d'air froid dans ledit prérefroidisseur.

Les figures du dessin annexé feront bien comprendre comment l'invention peut être réalisée. Sur ces figures, des références identiques désignent des éléments semblables.

La figure 1 illustre, en coupe axiale schématique, un premier mode de réalisation du turbomoteur à double flux conforme à la présente invention.

La figure 2 montre schématiquement en perspective un exemple de réalisation de prérefroidisseur pour le turbomoteur de la figure 1.

Les figures 3 et 4 illustrent, en vues semblables à la figure 1, deux variantes de réalisation du turbomoteur conforme à la présente invention.

La figure 5 montre schématiquement en perspective un exemple de réalisation du prérefroidisseur pour les turbomoteurs des figures 3 et 4.

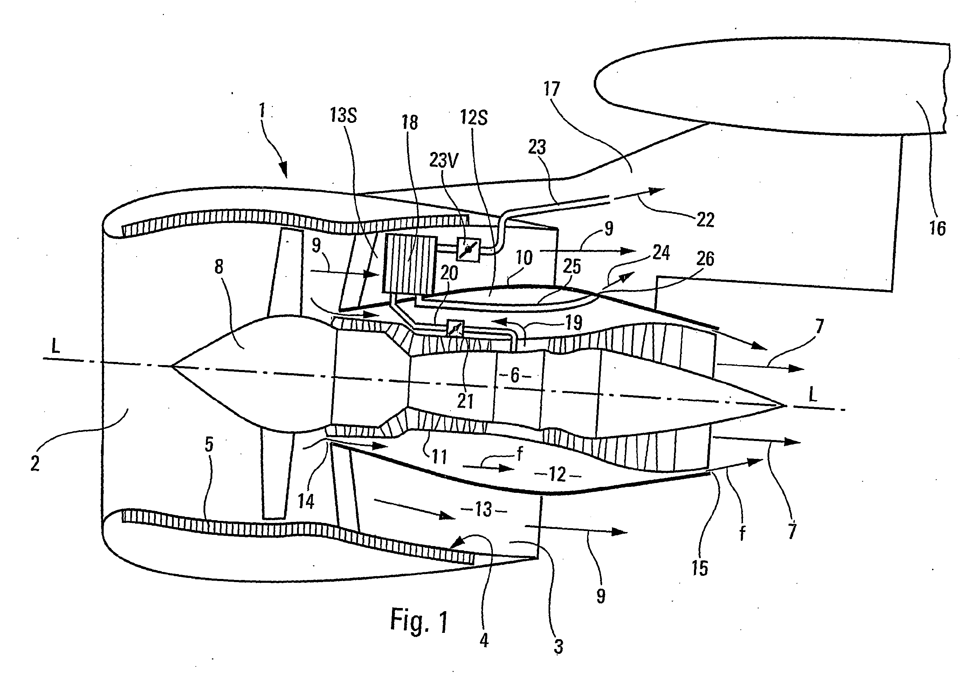

Le turbomoteur à double flux, montré par chacune des figures 1, 3 et 4, comporte une nacelle creuse 1 d'axe longitudinal L-L pourvue, à l'avant, d'une entrée d'air 2 et, à l'arrière, d'une tuyère de sortie 3. Ladite nacelle creuse 1 porte intérieurement un carénage 4, de préférence revêtu au moins en partie de revêtements d'atténuation acoustique 5, destinés à atténuer les bruits internes dudit turbomoteur.

A l'intérieur de la nacelle creuse 1, sont disposés :
- un générateur de flux chaud central 6, comprenant de façon connue des compresseurs à basse et haute pression, une chambre de combustion et des turbines à basse et haute pression, et engendrant le flux chaud axial 7 dudit turbomoteur ;
- une soufflante 8 disposée en avant dudit générateur central 6 et engendrant le flux froid 9 annulaire dudit turbomoteur ; et
- un carénage interne 10 entourant ledit générateur central 6 en ménageant avec le carter 11 de celui-ci une chambre 12 à section annulaire entourant ledit générateur.

Le carénage interne 10 et le carénage 4, qui lui est externe, forment entre eux un canal de soufflante 13 à section annulaire entourant le générateur central 6 et à travers lequel s'écoule le flux froid 9.

Entre le carénage interne 10 et le générateur central 6 sont formées, à l'avant, une fente annulaire d'admission d'air 14 et, à l'arrière, une fente annulaire d'évacuation d'air 15. Ainsi, la chambre 12 peut être parcourue par un courant d'air froid f, prélevé sur le flux froid 9 au niveau de la fente avant 14 et rejeté dans le flux chaud 7 au niveau de la fente arrière 15, ce courant d'air froid f permettant de réguler le générateur central 6 en température.

Par ailleurs, de façon usuelle, la nacelle 1 est supportée par une aile 16 de l'aéronef (partiellement représentée) par l'intermédiaire d'un mât de suspension 17.

Dans le mode de réalisation de l'invention illustré par la figure 1, on prévoit un prérefroidisseur 18, disposé dans la partie supérieure 13S du canal de soufflante 13. Ce prérefroidisseur 18 est alimenté en air chaud 19, à partir du générateur central 6, par l'intermédiaire d'une conduite 20 sur laquelle est prévue une vanne de régulation d'air chaud 21. L'air chaud refroidi 22 engendré par le prérefroidisseur 18 est adressé aux équipements utilisateurs (non représentés) par une conduite 23 qui passe dans le mât de suspension 17 et qui peut être pourvue d'une vanne de régulation 23V. Quant à lui, l'air froid réchauffé 24 engendré par le prérefroidisseur 18 est envoyé dans le flux froid 9, en sortie de la tuyère 3, par une conduite d'évacuation 25, disposée dans la chambre à section annulaire 12 et reliant le prérefroidisseur 18 à un orifice d'évacuation 26 pratiqué dans le carénage interne 10, en arrière de ladite tuyère 3, et regardant vers le haut au moins approximativement en direction de l'aile 16 et du mât 17, c'est-à-dire à la partie supérieure dudit carénage interne 10.

La conduite 25 est réalisée en une matière réfractaire résistant aux températures élevées, par exemple en céramique, et elle est, de préférence, toute entière disposée dans la partie supérieure 12S de la chambre 12.

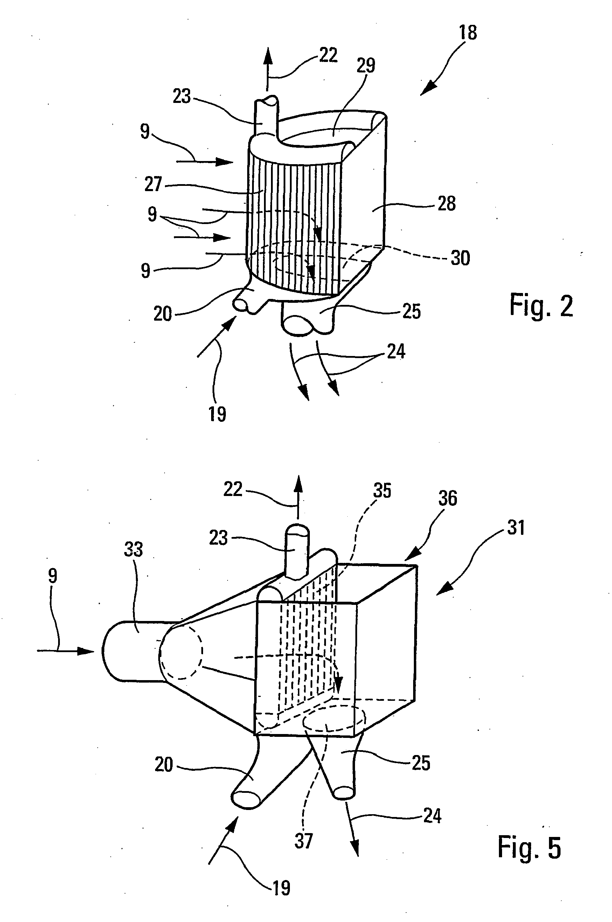

Le prérefroidisseur 18 peut présenter la structure connue représentée sur la figure 2. Dans l'exemple de réalisation de cette figure 2, le prérefroidisseur 18 comporte un ensemble 27 de tubes échangeurs, qui sont alimentés en commun en air chaud 19 par la conduite 20 et qui sont refroidis par le flux froid 9, traversant ledit ensemble 27. Lesdits tubes échangeurs sont reliés en commun à la conduite 23, dans laquelle circule le courant d'air chaud refroidi 22.

L'ensemble des tubes échangeurs 27 présente, par exemple, la forme d'une étrave et est obturé, à l'arrière, par une cloison 28, de façon à former une cavité 29 dans laquelle pénètre la partie du flux froid 9 ayant traversé ledit ensemble 27 et réchauffé par les tubes échangeurs de ce dernier pour former le courant d'air froid réchauffé 24. La conduite 25 d'évacuation du courant 24 communique avec la cavité 29 par une ouverture 30 de cette dernière, de sorte qu'elle peut conduire ledit courant 24 jusqu'à l'orifice 26, à travers la partie supérieure 12S de la chambre 12.

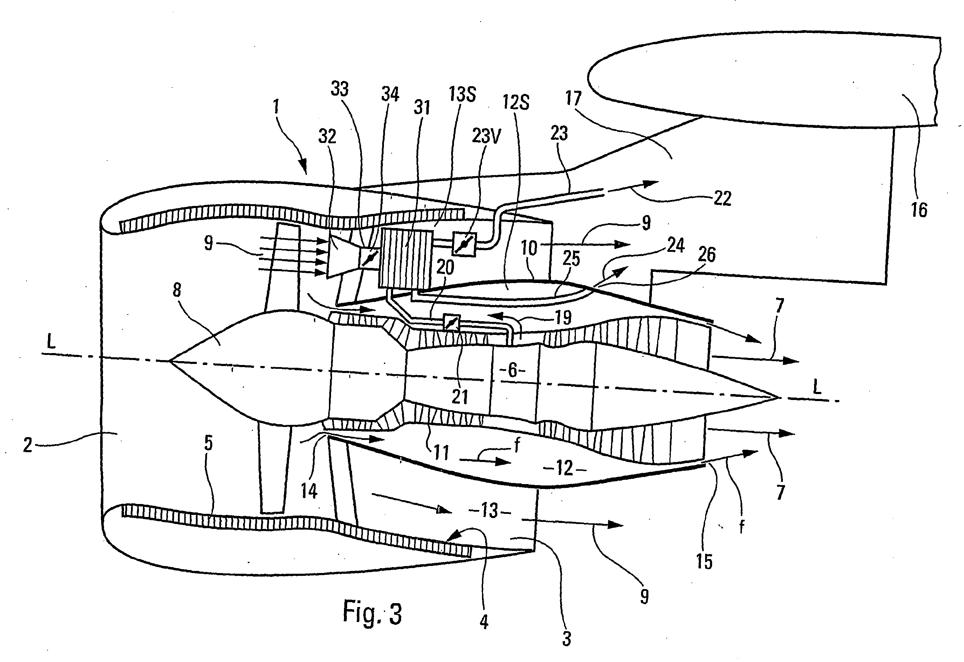

Dans le mode de réalisation de l'invention illustré par la figure 3, on retrouve tous les éléments portant les références 1 à 12, 12S, 13S, 13 à 17, 19 à 26 et 23V et décrits ci-dessus en regard de la figure 1. Toutefois, par rapport au mode de réalisation de cette dernière figure, le prérefroidisseur 18 a été remplacé par un prérefroidisseur 31, dont un exemple de réalisation est illustré par la figure 5. De plus, du côté de la soufflante 8, on a prévu une écope 32 apte à prélever une partie du flux froid 9 et à conduire celle-ci au prérefroidisseur 31 par l'intermédiaire d'une conduite 33 pourvue d'une vanne de régulation 34.

Dans l'exemple de la figure 5, le prérefroidisseur 31 comporte un ensemble de tubes échangeurs 35, qui sont alimentés en commun en air chaud 19 par la conduite 20 et qui sont refroidis par la partie du flux froid 9, captée par l'écope 32 et amenée par la conduite 33. Lesdits tubes échangeurs de l'ensemble 35 sont reliés en commun à la conduite 23, dans laquelle circule le courant d'air chaud refroidi 22.

L'ensemble de tubes échangeurs 35 forme une paroi d'une enceinte 36 à l'intérieur de laquelle pénètre ladite partie du flux froid 9, prélevée par l'écope 32, ayant traversé ledit ensemble 35 et formant ledit courant d'air froid réchauffé 24. La conduite 25 d'évacuation du courant 24 communique avec l'enceinte 36 par une ouverture 37 de cette dernière, de sorte qu'elle peut conduire ledit courant 24 jusqu'à l'orifice 26 à travers la partie supérieure 12S de la chambre 12.

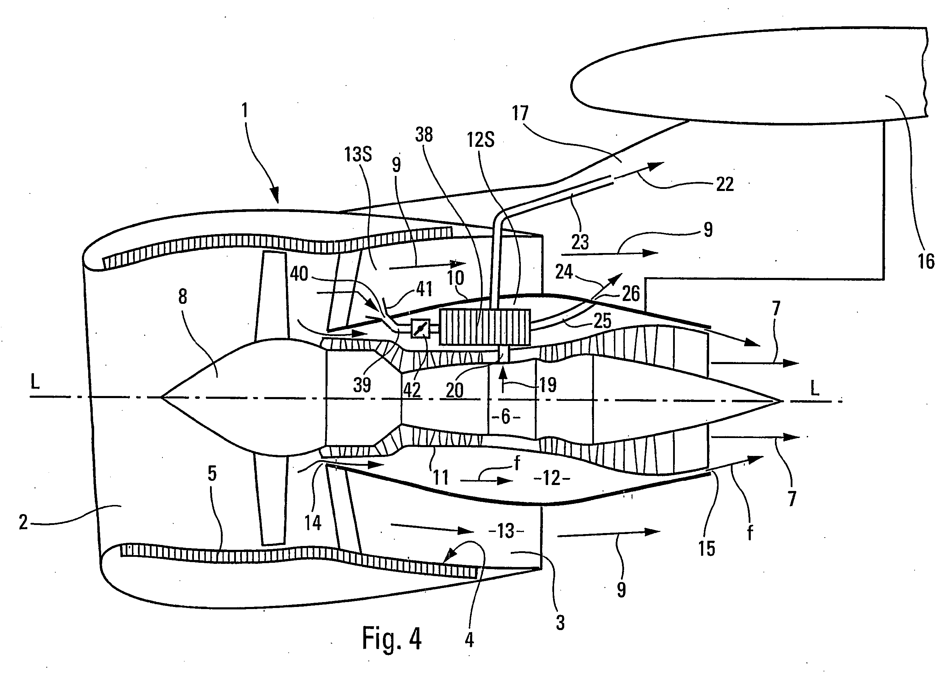

Dans le mode de réalisation de l'invention illustré par la figure 4, on retrouve tous les éléments portant les références 1 à 12, 12S, 13S, 13 à 17, 19, 20 et 22 à 26 et décrits en regard de la figure 1. Dans ce mode de réalisation, les vannes 21 et 23V ont été supprimées, bien qu'elles pourraient être présentes. De plus, par rapport au mode de réalisation de cette figure 1, le prérefroidisseur 18 logé dans la partie supérieure 13S du canal de soufflante 13 a été remplacé par un prérefroidisseur 38 logé dans la partie supérieure 12S de la chambre 12. Ce prérefroidisseur peut être de type semblable au prérefroidisseur 31 de la figure 5.

Une conduite de prélèvement 39, disposée à la partie supérieure 12S de la chambre 1 2, relie le prérefroidisseur 38 à un orifice de prélèvement 40, pratiqué dans la partie avant du carénage interne 10. Ledit orifice de prélèvement 40 est pourvu d'une écope 41. Ainsi, une partie du flux froid 9, captée par l'orifice 40 et l'écope 41, est amenée au prérefroidisseur 38, pour refroidir le courant d'air chaud 19 et engendrer le courant d'air chaud refroidi 22 et le courant d'air froid réchauffé 24. Ce dernier est évacué du prérefroidisseur 38 par la conduite 25 qui le conduit à l'orifice 26.

Une vanne de régulation 42 est montée sur la conduite de prélèvement 39 pour contrôler l'admission d'air froid et donc la température du courant d'air chaud refroidi 22.

## Revendications

1. Turbomoteur à double flux pour aéronef, ledit turbomoteur étant suspendu à une aile (16) de ce dernier par l'intermédiaire d'un mât de suspension (17) et comportant :
- une nacelle creuse (1) à axe longitudinal (L-L) pourvue, à l'avant, d'une entrée d'air (2) et, à l'arrière, d'une tuyère (3) ;
- un générateur central (6) de flux chaud, disposé axialement dans ladite nacelle (1) ;
- une soufflante (8) disposée dans ladite nacelle (1), en avant dudit générateur central (6), et apte à engendrer le flux froid (9) pour ledit turbomoteur ;
- un carénage externe (4) porté intérieurement par ladite nacelle (1) et un carénage interne (10) entourant ledit générateur central (6), lesdits carénages externe et interne formant entre eux un canal de soufflante (13) à section annulaire pour ledit flux froid (9), ledit carénage interne (10) délimitant avec ledit générateur central (6) une chambre à section annulaire (12) entourant ledit générateur central (6) ; et
- un prérefroidisseur (18, 31, 38) recevant un courant d'air chaud (19) prélevé sur ledit générateur central (6) et un courant d'air froid prélevé sur ledit flux froid (9) afin d'engendrer un courant d'air chaud refroidi (22) destiné à réaliser des fonctions à bord de l'aéronef, telles que conditionnement d'air ou dégivrage, ledit prérefroidisseur engendrant concomitamment un courant d'air froid réchauffé (24),
**caractérisé en ce que**, pour l'évacuation dudit courant d'air froid réchauffé (24), il comporte au moins une conduite d'évacuation (25) disposée dans ladite chambre (12) et reliant ledit prérefroidisseur (18, 31, 38) à au moins un orifice d'évacuation (26) pratiqué dans ledit carénage interne (10), en sortie de ladite tuyère (3) de la nacelle (1), et regardant vers le haut au moins approximativement en direction de ladite aile (16).

2. Turbomoteur selon la revendication 1,
**caractérisé en ce que** ladite conduite d'évacuation (25) est au moins en grande partie disposée dans la partie supérieure (12S) de ladite chambre (12).

3. Turbomoteur selon l'une des revendications 1 ou 2,
**caractérisé en ce que** ladite conduite d'évacuation (25) est réalisée en une matière réfractaire résistant aux températures élevées.

4. Turbomoteur selon l'une des revendications 1 à 3,
**caractérisé en ce que** ledit prérefroidisseur (18, 31) est disposé dans ledit canal de soufflante (13).

5. Turbomoteur selon la revendication 4,
**caractérisé en ce que** ledit prérefroidisseur (18) est soumis à l'action directe dudit flux froid (9) et **en ce qu'**une vanne de régulation (21) est prévue sur la conduite (20) amenant ledit courant d'air chaud (19) audit prérefroidisseur (18).

6. Turbomoteur selon la revendication 4,
**caractérisé en ce qu'**une écope (32) est prévue pour amener une partie dudit flux froid (9) audit prérefroidisseur (31) et **en ce qu'**une vanne de régulation (34) est prévue entre ladite écope (32) et ledit prérefroidisseur (31).

7. Turbomoteur selon l'une des revendications 1 à 3,
**caractérisé en ce que** ledit prérefroidisseur (38) est disposé dans ladite chambre (12) entourant ledit générateur central (6).

8. Turbomoteur selon la revendication 7,
**caractérisé en ce que,** pour l'amenée dudit courant d'air froid audit prérefroidisseur (38), il est prévu au moins une conduite de prélèvement (39) disposée au moins en partie dans ladite chambre (12) et reliant ledit prérefroidisseur (38) à au moins un orifice de prélèvement (40) pratiqué dans ledit carénage interne (10).

9. Turbomoteur selon la revendication 8,
**caractérisé en ce que** ledit orifice de prélèvement (40) est pourvu d'une écope (41).

10. Turbomoteur selon l'une des revendications 8 ou 9,
**caractérisé en ce qu'**une vanne de régulation (42) est prévue sur ladite conduite de prélèvement (39).

## Claims

1. A bypass turbine engine for an aircraft, said turbine engine being suspended from a wing (16) of this aircraft via a suspension pylon (17) and comprising:
- a hollow nacelle (1) of longitudinal axis (L-L) provided with an air inlet (2) at the front and with a jet pipe (3) at the rear;
- a central hot-stream generator (6), positioned axially in said nacelle (1);
- a fan (8) positioned in said nacelle (1) forward of said central generator (6) and able to generate the cold stream (9) for said turbine engine;
- an outer fairing (4) borne internally by said nacelle (1) and an inner fairing (10) surrounding said central generator (6), said outer and inner fairings between them forming a fan duct (13) of annular cross section for said cold stream (9), said inner fairing (10) delimiting with said central generator (6) a chamber (12) of annular cross section surrounding said central generator (6); and
- a pre-cooler (18, 31, 38) receiving a current of hot air (19) bled from said central generator (6) and a current of cold air bled from said cold stream (9) so as to generate a current of cooled hot air (22) intended for performing functions on board the aircraft, such as air conditioning or deicing, said pre-cooler at the same time generating a current of heated cold air (24),
**characterized in that,** in order to discharge said current of heated cold air (24), it comprises at least one discharge pipe (25) positioned in said chamber (12) and connecting said pre-cooler (18, 31, 38) to at least one discharge orifice (26) made in said inner fairing (10) where said jet pipe (3) leaves the nacelle (1), and facing upward at least approximately toward said wing (16).

2. The turbine engine as claimed in claim 1,
**characterized in that** said discharge pipe (25) is at least for the most part positioned in the upper part (12S) of said chamber (12).

3. The turbine engine as claimed in one of claims 1 and 2,
**characterized in that** said discharge pipe (25) is made of a refractory material able to withstand high temperatures.

4. The turbine engine as claimed in one of claims 1 to 3,
**characterized in that** said pre-cooler (18, 31) is positioned in said fan duct (13).

5. The turbine engine as claimed in claim 4,
**characterized in that** said pre-cooler (18) is subjected to the direct action of said cold stream (9), and **in that** a regulating valve (21) is provided on the pipe (20) carrying said current of hot air (19) to said pre-cooler (18).

6. The turbine engine as claimed in claim 4,
**characterized in that** a scoop (32) is provided for carrying some of said cold stream (9) to said pre-cooler (31), and **in that** a regulating valve (34) is provided between said scoop (32) and said pre-cooler (31).

7. The turbine engine as claimed in one of claims 1 to 3,
**characterized in that** said pre-cooler (38) is positioned in said chamber (12) surrounding said central generator (6).

8. The turbine engine as claimed in claim 7,
**characterized in that**, in order to carry said current of cold air to said pre-cooler (38), there is at least one bleed pipe (39) positioned at least partially in said chamber (12) and connecting said pre-cooler (38) to at least one bleed orifice (40) made in said inner fairing (10).

9. The turbine engine as claimed in claim 8,
**characterized in that** said bleed orifice (40) is provided with a scoop (41).

10. The turbine engine as claimed in one of claims 8 or 9,
**characterized in that** a regulating valve (42) is provided on said bleed pipe (39).

## Patentansprüche

1. Zweikreistriebwerk für ein Flugzeug, wobei das Triebwerk über eine Aufhängungsstrebe (17) an einem Flügel (16) des Letzteren aufgehängt ist und Folgendes umfasst:
- eine hohle Gondel (1) mit einer Längachse (L-L), die vorne einen Lufteinlass (2) und hinten eine Düse (3) aufweist,
- einen zentralen, axial in der Gondel (1) angeordneten Generator (6) eines heißen Stroms,
- ein in der Gondel (1) vor dem zentralen Generator (6) angeordnetes Gebläse (8), das geeignet ist, den kalten Strom (9) für das Triebwerk zu erzeugen,
- eine Außenverkleidung (4), die innen fest an der Gondel (1) angebracht ist und eine Innenverkleidung (10), die den zentralen Generator (6) umgibt, wobei die Außen- und die Innenverkleidung zwischen sich einen Fanströmungskanal (13) mit ringförmigem Querschnitt für den kalten Strom (9) ausbilden und die Innenverkleidung (10) mit dem zentralen Generator (6) eine Kammer (12) mit ringförmigem Querschnitt, die den zentralen Generator (6) umgibt, abgrenzt und
- einen Vorkühler (18, 31, 38), der einen aus dem zentralen Generator (6) entnommenen Heißluftstrom (19) und einen aus dem kalten Strom (9) entnommenen Kaltluftstrom aufnimmt, um einen gekühlten Heißluftstrom (22) zu erzeugen, der dazu vorgesehen ist, an Bord des Flugzeugs Funktionen wie Klimatisierung oder Enteisung durchzuführen, wobei der Vorkühler gleichzeitig einen erwärmten Kaltluftstrom (24) erzeugt,
**dadurch gekennzeichnet, dass** es zur Ableitung des erwärmten Kaltluftstroms (24) mindestens eine Abführleitung (25) umfasst, die in der Kammer (12) angeordnet ist und den Vorkühler (18, 31, 38) mit mindestens einer Abflussöffnung (26) verbindet, die am Austritt der Düse (3) der Gondel (1) in der Innenverkleidung (10) gebildet ist und nach oben, zumindest annähernd in Richtung auf den Flügel (16), ausgerichtet ist.

2. Triebwerk nach Anspruch 1,
**dadurch gekennzeichnet, dass** die Abführleitung (25) zumindest großteils in dem oberen Teil (12S) der Kammer (12) angeordnet ist.

3. Triebwerk nach Anspruch 1 oder 2,
**dadurch gekennzeichnet, dass** die Abführleitung (25) aus einem feuerfesten Material hergestellt ist, das hochtemperaturbeständig ist.

4. Triebwerk nach einem der Ansprüche 1 bis 3,
**dadurch gekennzeichnet, dass** der Vorkühler (18, 31) in dem Fanströmungskanal (13) angeordnet ist.

5. Triebwerk nach Anspruch 4,
**dadurch gekennzeichnet, dass** der Vorkühler (18) unmittelbar von dem kalten Strom (9) angeströmt wird und **dadurch**, dass an der Leitung (20), die dem Vorkühler (18) den Heißluftstrom (19) zuführt, ein Regelventil (21) vorgesehen ist.

6. Triebwerk nach Anspruch 4,
**dadurch gekennzeichnet, dass** zum Zuführen eines Teils des kalten Stroms (9) zu dem Vorkühler (31) ein Ansaugstutzen (32) vorgesehen ist und **dadurch**, dass zwischen dem Ansaugstutzen (32) und dem Vorkühler (31) ein Regelventil (34) vorgesehen ist.

7. Triebwerk nach einem der Ansprüche 1 bis 3,
**dadurch gekennzeichnet, dass** der Vorkühler (38) in der Kammer (12), die den zentralen Generator (6) umgibt, angeordnet ist.

8. Triebwerk nach Anspruch 7,
**dadurch gekennzeichnet, dass** zur Zuführung des Kaltluftstroms zu dem Vorkühler (38) mindestens eine Entnahmeleitung (39) vorgesehen ist, die zumindest teilweise in der Kammer (12) angeordnet ist und die den Vorkühler (38) mit mindestens einer in der Innenverkleidung (10) gebildeten Entnahmeöffnung (40) verbindet.

9. Triebwerk nach Anspruch 8,
**dadurch gekennzeichnet, dass** die Entnahmeöffnung (40) mit einem Ansaugstutzen (41) ausgestattet ist.

10. Triebwerk nach Anspruch 8 oder 9,
**dadurch gekennzeichnet, dass** an der Entnahmeleitung (39) ein Regelventil (42) vorgesehen ist.
